# EUROPEAN PATENT SPECIFICATION

(11) **EP 3 058 803 B1**
(45) Date of publication and mention of the grant of the patent: **06.12.2017**
(21) Application number: 16155826.7
(22) Date of filing: 16.02.2016
(51) Int. Cl.: A01D 45/02

(54) **CORN EAR HARVESTER DEVICE AND COMBINE HARVESTER COMPRISING CORN EAR HARVESTER DEVICES**
MAISKOLBENERNTEMASCHINENVORRICHTUNG UND MÄHDRESCHER MIT MAISKOLBENERNTEMASCHINENVORRICHTUNGEN
DISPOSITIF DE RÉCOLTE D'ÉPIS DE MAÏS ET DE MOISSONNEUSE-BATTEUSE COMPRENANT DES DISPOSITIFS DE RÉCOLTE D'ÉPIS DE MAÏS

(30) Priority: 17.02.2015 US 201562116992 P
(43) Date of publication of application: 24.08.2016
(73) Proprietor: CNH Industrial Belgium nv, 8210 Zedelgem (BE)
(72) Inventor: Aesaert, Glenn, 8870 Izegem (BE); Bonte, Ward, 8950 Heuvelland (BE); Conroy, John J., Ephrata, Pennsylvania 17522 (US); De Block, Aelbrecht, 9308 Gijzegem (BE); Gessel, James M., Geneseo, Illinois 61254 (US); Lehman, Barry E., York, Pennsylvania 17406 (US); Missotten, Bart M.A., 3020 Herent (BE); Moutton, Bart, 8830 Gits (BE); Bonne, Geert, 8340 Damme (BE); Ricketts, Jonathan E., Coal Valley, Illinois 61240 (US); Tallir, Frederik, 8600 Esen (Diksmuide) (BE); Vandamme, Willem, 8480 Ichtegem (BE); Van Overschelde, Pieter, 8200 Sint-Andries (BE)
(74) Representative: CNH Industrial IP Department

(56) References cited:
- EP-A1- 1 992 214
- US-A- 2 571 811
- US-A- 5 924 269
- US-B2- 8 224 534

## Description

The invention pertains to a corn ear harvester device and a combine harvester comprising a plurality of such corn ear harvester devices.

When harvesting corn with the aim of collecting corn kernels using a combine harvester, the corn ears that contain the corn kernels are separated from the stalks on which the corn ears grow. To this end, the combine harvester is provided with plurality of corn ear harvester devices which are arranged in the corn header, at the front of the combiner harvester.

US 8,224,534 discloses such a corn ear harvester device which is suitable for use in a corn header of a combiner harvester.

The known corn ear harvester device comprises a corn stalk channel that is delimited by two deck plates that are spaced apart from each other to form the corn stalk channel between them. The combine harvester drives through the corn field and catches the successive corn stalks of a row of corn plants in the stalk channel. Below the deck plates, a pair of snap rolls is arranged. The snap rolls are also spaced apart from each other, with the corn stalk channel extending between them. The snap rolls engage a corn stalk that is caught in the corn stalk channel and pull the corn stalk downwards. The corn stalk channel is wide enough to accommodate the corn stalk, but too narrow for the corn ears to pass through. The corn ears are pulled against the top of the deck plates, and are separated from the corn stalk when the corn stalk is pulled further downwards by the snap rolls.

On top of each deck plate, a gathering chain device is arranged. The gathering chain device comprises a plurality of paddles, that are driven by an endless chain. The paddles engage the separated corn ears and transport them towards the header conveyor. The header conveyor collects the harvested corn ears and transports them towards the processing device of the combine harvester, in which the corn kernels are removed from the harvested corn ears.

In the known corn ear harvester device, corn ears sometimes get jammed in the corn stalk channel and stuck between the deck plates. This causes corn kernels to be removed from the corn ear, for example due to the impact of successive paddles of the gathering chain device. These kernels cannot be harvested any more. Furthermore, the jamming prevents the proper processing of successive corn plants until the jammed corn ear is removed from the corn stalk channel.

The invention aims to provide an improved corn earn harvester device.

In accordance with the invention, a corn ear harvester device for separating corn ears from corn stalks is provided which comprises:
- two deck plates, wherein each deck plate has an ear blocking surface and a stalk guide surface, which deck plates are spaced apart from each other with the stalk guide surface of a first deck plate and the stalk guide surface of a second deck plate facing each other,
- two gathering chain devices, respectively associated with the first and second deck plates, wherein each gathering chain device comprises:
   - a drivable endless chain,
   - at least one corn ear paddle which is adapted to engage and transport a harvested corn ear,
   - a paddle connector which fixedly connects the corn ear paddle to the endless chain, wherein the endless chains are spaced apart from each other, and wherein one of the endless chains is drivable in a clockwise direction and the other of the endless chains is drivable in a counter-clockwise direction,
- a corn stalk channel for receiving and guiding a corn stalk, wherein the corn stalk channel comprises a deck plate channel section which extends between the stalk guide surfaces of the deck plates and a gathering chain channel section which extends between the endless chains of the gathering chain devices,
wherein the deck plate channel section has a width which is defined by the distance between the stalk guide surfaces of the deck plates and is selected to prevent corn ears passing through the deck plate channel section in a direction substantially perpendicular to the longitudinal direction of the corn stalk channel,
and wherein the at least one corn ear paddle of each gathering chain device is arranged adjacent to the respective associated deck plate on the side of the ear blocking surface of said deck plate, and wherein the endless chain of said gathering chain device is arranged adjacent to said deck plate on the side opposite to the ear blocking surface of said deck plate.

The corn ear harvester device comprises two deck plates, so a first deck plate and a second deck plate. Each deck plate has an ear blocking surface and a stalk guide surface. The ear blocking surface is the surface against which the corn ear is pulled during the separation of the corn ear from the stalk. In practical embodiments, this will usually be the top of the deck plate. The deck plates further comprise a stalk guide surface. The stalk guide surface is part of the wall of the corn stalk channel and guides the corn stalk when the corn stalk is pulled on in order to detach the corn ears from the corn stalk. In practical embodiments, the stalk guide surface usually extends in the direction of the thickness of the deck plate.

The first deck plate and second deck plate are spaced apart from each other with the stalk guide surface of the first deck plate and the stalk guide surface of the second deck plate facing each other.

Optionally, the ear blocking surface of the first deck plate and the ear blocking surface of the second deck plate extend in the same plane. This reduces the risk of tilting of the corn ear, and therewith the risk that the corn ear slips into the corn stalk channel where it is likely to get stuck between the stalk guide surfaces of the first and second deck plate.

The corn ear harvester device according to the invention further comprises two gathering chain devices, so a first gathering chain device and a second gathering chain device.

Each gathering chain device comprises at least a drivable endless chain, at least one corn ear paddle and a paddle connector.

The at least one corn ear paddle is adapted to engage and transport a harvested corn ear. It is fixedly connected to the endless chain by a paddle connector. Therefore, it moves along with the endless chain when the drivable sprocket wheel is rotated. In practical embodiments, the gathering chain device will usually comprise a plurality of paddles. Each paddle is fixedly connected to the endless chain by its own paddle connector, and the paddles are spaced apart from each other.

In the corn harvester device, the endless chains of adjacent gathering chain devices are spaced apart from each other. The endless chain of one of the gathering chain devices is drivable in a clockwise direction and the endless chain of the other gathering chain device is drivable in a counter-clockwise direction.

The corn ear harvester device according to the invention further comprises a corn stalk channel. The corn stalk channel comprises a deck plate channel section and a gathering chain channel section. The deck plate channel section extends between the stalk guide surface of first deck plate and the stalk guide surface of the second deck plate. The gathering chain channel section extends between endless chains of the gathering chain devices.

In a possible embodiment, the each endless chain forms a chain loop, and each chain loop has an operational part. This is the part of the chain loop in which the corn ear paddles move the harvested corn ears over the ear blocking surface of the deck plates towards a header conveyor of a combine harvester or other corn harvester. In such an embodiment, gathering chain channel section extends between operational parts of the endless chains of adjacent gathering chain devices.

In the corn ear harvester device according to the invention, the paddle of the first gathering chain device is arranged adjacent to the first deck plate on the side of the ear blocking surface of said first deck plate. The endless chain of the first gathering chain device is arranged adjacent to the first deck plate on the side opposite to the ear blocking surface of said first deck plate.

The paddle of the second gathering chain device is arranged adjacent to the second deck plate on the side of the ear blocking surface of said second deck plate. The endless chain of the second gathering chain device is arranged adjacent to the second deck plate on the side opposite to the ear blocking surface of said second deck plate.

In the corn ear harvester device according to the invention, the corn stalk is pulled though the corn stalk channel, preferably in the longitudinal direction of the corn stalk. The longitudinal direction of the stalk is at an angle relative to the longitudinal direction of the corn stalk channel. However, the corn ears cannot pass through the corn stalk channel because the corn stalk channel is too narrow, because the distance between the adjacent first and second deck plates is selected to prevent corn ears passing through the deck plate channel section in a direction substantially perpendicular to the longitudinal direction of the corn stalk channel. This makes that the corn ear will be pulled against the corn ear blocking surface of one or both deck plates. The corn stalk will be pulled further, by which pulling on the corn stalk severs the corn ear from the corn stalk.

The width of the corn channel is selected based on the expected diameter of the corn ears to be harvested. For example, the expected diameter of the corn earns ranges between a minimum diameter and a maximum diameter, with a certain distribution of the diameters over this range. The width of the corn stalk channel is then for example selected such that 98% of the corn ears will have a diameter that is larger than the width of the corn stalk channel. For example, the width of the corn stalk channel can be about 4 cm to about 8 cm, for example 4.5 cm, 5 cm, 5.5 cm, 6 cm or 6.5 cm. The width of the corn stalk channel optionally is variable during operation and/or adjustable.

Optionally, the corn ear harvester device further comprises a stalk puller to effect the pulling of the corn stalk through the corn stalk channel. The stalk puller is adapted to force a corn stalk through the corn stalk channel in a direction that is substantially parallel to the longitudinal direction of said corn stalk. For example, the stalk puller comprises a pair of snap rollers, which are optionally provided with trash grabbers.

Optionally, the corn stalk is pulled through the corn stalk channel in a substantially vertical direction.

If no stalk puller is present, the corn stalk will be pulled through the corn stalk channel due to a motion of the corn ear harvester device relative to the ground of the corn field.

In case the corn ear somehow gets stuck between the stalk guide surfaces of the deck plates, in the corn ear harvester device according to the invention, a paddle or paddle connector engages this corn ear.

The paddle and/or paddle connector move relative to the deck plates. They take the stuck corn ear with them, and move it relative to the deck plates in the longitudinal direction of the corn stalk channel. This way, the stuck corn ear is moved out of the way of the subsequent corn stalks to be processed.

Furthermore, in embodiments wherein the corn ear harvester device according to the invention is used in a combine harvester, the paddle and/or paddle connector, which ever one engages the stuck corn ear, optionally transfer the corn ear towards a part of the combine harvester where is can be joined with the flow of normally harvested corn ears, so that it can be processed in the normal way. This improves the yield of harvested corn kernels.

Furthermore, as in the corn harvester device according to the invention the corn ears that initially get stuck in the corn stalk channel (e.g. between the stalk guiding surfaces of deck plates that delimit the corn stalk channel) are transported into the combine harvester for harvesting of the corn kernels anyway, the width of the corn ear channel can optionally selected to be wider than in known corn harvester devices. This results in a larger harvesting capacity, i.e. more corn ears can be harvested per unit of time.

As a further advantage, by arranging the endless chains of the gathering chain devices below the deck plates instead of on top of the deck plates, additional space is available for the corn ears on the deck plates. More corn ears can be handled by the paddles and the paddles can be wider than in conventional corn ear harvester devices. This also results in a larger harvesting capacity.

Furthermore, in the corn ear harvester device according to the invention, the harvested corn ears that do not get stuck between the deck plates are less likely to come into contact with the endless chains of the gathering chain devices. This reduces the risk that the endless chains detach corn kernels from the corn ears. Also the corn ears that do get stuck are removed from the corn stalk channel more gently and with less damage to the respective corn ear. This increases the amount of corn kernels that can be harvested.

In a possible embodiment, the deck plate channel section of the corn stalk channel is wider than the gathering chain channel section.

In such an embodiment, when a corn ear gets stuck in the corn stalk channel, the endless chains of the gathering chain device will engage the corn ear, as the endless chains are arranged on the opposite side of the corn ear blocking surfaces of the deck plates, and as they protrude from under the deck plates due to the gathering chain channel section being narrower than the deck plate channel section.

A further advantage of this embodiment is that in case a corn ear gets stuck in the corn stalk channel, it is transported into the combine harvester by the gathering chain devices right away. The corn ear will not or hardly stop moving relative to the deck plates. This makes that the flow of corn ears into the combine harvester is not or hardly disrupted by the stuck corn ear. This results in a larger harvesting capacity and a smooth flow of corn ears into the combine harvester.

In a possible embodiment, the gathering chain devices are adapted such that in operation, the endless chains of both gathering chain devices have substantially the same chain velocity. The chain velocity is the velocity of the endless chain relative to the deck plate.

In a possible embodiment, the gathering chain devices are adapted such that in operation, the chain velocity of the endless chain of at least one gathering chain device is the same as the driving velocity of the combine harvester onto which the corn harvester device is mounted relative to the ground over which it is driven.

Optionally, the chain velocity of the endless chains of both gathering chain devices is the same as the driving velocity of the combine harvester onto which the corn harvester device is mounted relative to the ground over which it is driven.

When the chain velocity of the endless chain of the gathering chain device is the same or substantially the same as the driving velocity of the combine harvester, the corn plant will experience no horizontal speed during the harvesting of the corn ears. The results in less damage to the corn plant, a smoother harvesting process and the possibility of a larger harvesting capacity.

In a possible embodiment, the endless chain of each gathering chain device forms a chain loop, which chain loop comprises at least one substantially straight operational part. The operational part is the part of the chain loop in which the endless chain is or can be active in the process of severing corn ears from corn stalks and/or transporting the harvested corn ears to the header receiving area of the header conveyor. The operational part of the endless chain extends generally along the corn stalk channel and forms part of the wall thereof. The operational parts of the endless chains delimit the gathering chain channel section of the corn stalk channel. The operational part further is the part of the chain loop in which the corn ear paddles move the harvested corn ears over the ear blocking surface of the deck plates towards a header conveyor of a combine harvester or other corn harvester

Optionally, in such an embodiment, the chain loop of the first gathering chain device extends in a plane that is substantially parallel to the plane of the first deck plate and/or the chain loop of the second gathering chain device extends in a plane that is substantially parallel to the plane of the second deck plate. In this embodiment, the distance between the side of the endless chain facing the corn stalk channel in the operational part of the chain loop and the stalk guiding surface of the deck plate on the same side of the corn stalk channel is constant over the length of operational part of the endless chain. If the deck plate channel section of the corn stalk channel is wider than the gathering chain channel section, the distance over which the endless chains protrude from under the deck plates is constant over the length of operational part of the endless chains.

In a possible embodiment, at least one paddle connector extends through the deck plate channel section of the corn stalk channel. This has the advantage that this paddle connector can assist in removing a corn ear that got stuck in the corn stalk channel from the corn stalk channel.

Alternative or in addition, at least one paddle connector extends through an aperture in a deck plate.

In a possible embodiment, at least one paddle extends over at least a part of the width of the corn stalk channel, in particular over the width of the deck plate channel section of the corn stalk channel. Optionally, at least one paddle extends over more than 50% of the width of the corn stalk channel, in particular over the width of the deck plate channel section of the corn stalk channel. Optionally, a paddle that extends over at least a part of the width of the corn stalk channel also extends over a part of the deck plate.

In a possible embodiment, at least one paddle of the first gathering chain device extends over at least a part of the width of the corn stalk channel and at least one paddle of the second gathering chain device extends over at least a part of the width of the corn stalk channel.

In these embodiments, the paddles help to prevent that a corn ear gets stuck in the corn stalk channel.

In a possible embodiment, at least one paddle is wider than the width of a corn ear. Optionally, at least one paddle is wider than twice the width of a corn ear. In a possible embodiment, at least one paddle is wider than the length of a corn ear.

In a possible embodiment, the width of the gathering chain channel section and/or the width of the deck plate channel section of the corn stalk channel are adjustable. By adjusting the width of the corn stalk channel, the corn harvesting process can be optimized. The adjustment of the width of the corn stalk channel can take place in a controlled way, wherein the width is adjusted and then fixed after the adjustment has been made. Alternatively or in addition, the width can be adjustable and/or variable using springs, which allow variation of the width during the harvesting.

In a possible embodiment in which at least the width of the gathering chain channel section of the corn stalk channel is adjustable, at least one gathering chain device further comprises a chain guide which is adapted to engage the endless chain of said gathering chain device, optionally over at least a part of the operational part of the chain loop of said endless chain. This chain guide is moveable in a direction perpendicular to the endless chain, for example to the operational part of the endless chain, so as to adjust the width of the gathering chain channel section.

The chain guide can be spring loaded, or it can be fixed after adjustment of the width of the gathering chain channel section of the corn stalk channel.

Optionally, as an alternative or in addition, the deck plates are moveable too, to allow adjustment of the width of the deck plate channel section or adjustment of the width of the deck plate channel section and the width of the gathering chain channel section simultaneously.

In a possible embodiment in which at least the width of the gathering chain channel section of the corn stalk channel is adjustable, at least one gathering chain device comprises a sprocket wheel which engages the endless chain of said gathering chain device, and the position of this sprocket wheel is adjustable so as to adjust the width of the gathering chain channel section.

In a possible embodiment, the first and/or second gathering chain devices comprise a chain tensioner for keeping the endless chain at a desired tension.

In a possible embodiment, the corn stalk channel has an upstream end and a downstream end. The upstream end is where the corn stalk enters the corn stalk channel.

Optionally, the corn stalk channel is wider at the upstream end than at the downstream end.

In a possible embodiment, each gathering chain device comprises at least two sprocket wheels of which at least one is a drivable sprocket wheel. These sprocket wheels engage an endless chain of a gathering chain device, which endless chain is arranged over a part of the circumference of said sprocket wheels to form a chain loop. The chain loop comprises at least one straight operational part.

Optionally, in this embodiment, the operational part of the chain loop of the first gathering chain device and the operational part of the chain loop of the second gathering chain device are spaced apart from each other with the operational part of the chain loop of the first gathering chain device and the operational part of the chain loop of the second gathering chain device facing each other.

As a further option in this embodiment, the driving direction of drivable sprocket wheel of the first gathering chain device and the driving direction of the drivable sprocket wheel of the second gathering chain device are selected to make the endless chain of the first gathering chain device pass through the operational part of the chain loop of the endless chain of the first gathering chain device in the same direction as the endless chain of the second gathering chain device passes through the operational part of the chain loop of the endless chain of the second gathering chain device.

As a further option, the driving speed of the drivable sprocket wheel of the first gathering chain device and of the drivable sprocket wheel of the second gathering chain device are selected to make that the endless chain of the first gathering chain device and the endless chain of the second gathering chain device move at the same chain speed.

The invention further pertains to a combine harvester for harvesting corn, which combine harvester comprises:
- a corn header which comprises:
   - a plurality of corn ear harvester devices according to the invention, which corn ear harvester devices are arranged in a row with the corn stalk channels parallel to each other, wherein the corn stalk channels each have an upstream end for receiving a corn stalk and a downstream end at the opposite side of the upstream end, wherein in operation the endless chains move the corn ear paddles along a corn stalk channel in a direction from the upstream end towards the downstream end,
   - a header conveyor, which is arranged downstream of the corn ear harvester devices when seen in the direction of the movement of the corn ears through the combine harvester, which header conveyor has a plurality of corn ear receiving areas for receiving harvested corn ears from the corn ear harvester devices , and a corn ear discharge,
- a corn processing device, which is arranged downstream of the corn ear discharge to receive harvested corn ears from the corn ear discharge of the header conveyor, which corn ear processing device is adapted to remove the corn kernels from the harvested corn ears,
- a corn storage tank, which is adapted and arranged to receive the corn kernels from the corn processing device.

The combine harvester according to the invention comprises a corn header, a corn processing device and a corn storage tank. The corn header harvests the corn ears by separating the corn ears from the corn stalks and transports the harvested corn ears to the corn processing device. In the corn processing device, the corn kernels are removed from the corn ears. The corn kernels are then stored in a corn storage tank, which is emptied periodically or continuously.

The corn header comprises a plurality of corn ear harvester devices according to the invention and a header conveyor.

The corn ear harvester devices are arranged in a row, adjacent to each other, with the corn stalk channels parallel to each other. The corn stalk channels each have an upstream end for receiving a corn stalk and a downstream end at the opposite side of the upstream end. So, the corn stalk enters the corn stalk channel at the upstream end of said corn stalk channel. The upstream ends are all on the front side of the corn header, so that when the combine harvester is driven over a corn field, all corn stalk channels can receive consecutive cornstalks from a row of corn plants.

In operation, the paddles move the corn ears that have been separated from the corn stalks towards the downstream end of the corn stalk channel and towards the receiving areas of the header conveyor. This can for example be achieved by making that the endless chains of all gathering chain devices move in the direction from the upstream end towards the downstream end of the cornstalk channel when it passes through the operation part of its chain loop.

The header conveyor is arranged downstream of the corn ear harvester devices when seen in the direction of the movement of the corn ears through the combine harvester. The header conveyor has a plurality of corn ear receiving areas for receiving harvested corn ears from the corn ear harvester devices. The header conveyor further comprises a corn ear discharge. The header conveyor optionally comprises an auger for transporting the harvested corn ears from a receiving area to the corn ear discharge.

The corn processing device is arranged downstream of the corn ear discharge to receive harvested corn ears from the corn ear discharge of the header conveyor. The corn ear processing device is adapted to remove the corn kernels from the harvested corn ears.

The corn storage tank is adapted and arranged to receive the corn kernels from the corn processing device.

In a possible embodiment of a combine harvester according to the invention, the deck plates of the corn ear harvester devices according to the invention extend at an angle between 0° and 50° relative to the horizontal, optionally at an angle between 10° and 35° relative to the horizontal.

Optionally, the deck plates of a single corn ear harvester device extend in a common plane. Optionally, all deck plates in the corn header extend in the same common plane.

In a possible embodiment, the corn header comprises a drive for driving the drivable sprocket wheels of the corn ear harvester devices.

The invention will be described in more detail below under reference to the figures, in which in a non-limiting manner exemplary embodiments of the invention will be shown.

In the figures:
Fig. 1: illustrates an example of a combine harvester in accordance with the invention, as seen in side view,
Fig. 2: illustrates an example of a combine harvester in accordance with the invention, as seen in side view,
Fig. 3: illustrates a possible embodiment of a corn ear harvester device in accordance with the invention,
Fig. 4: illustrates gathering chain devices as can be used in the embodiment of fig. 3 in top view,
Fig. 5: illustrates the corn stalk channel in more detail, with the paddles and paddle connectors in order to better show the corn stalk channel,
Fig. 6: illustrates in a further embodiment a plurality (in this case three) of corn ear harvester devices as they can be used in a corn header of a combine harvester.

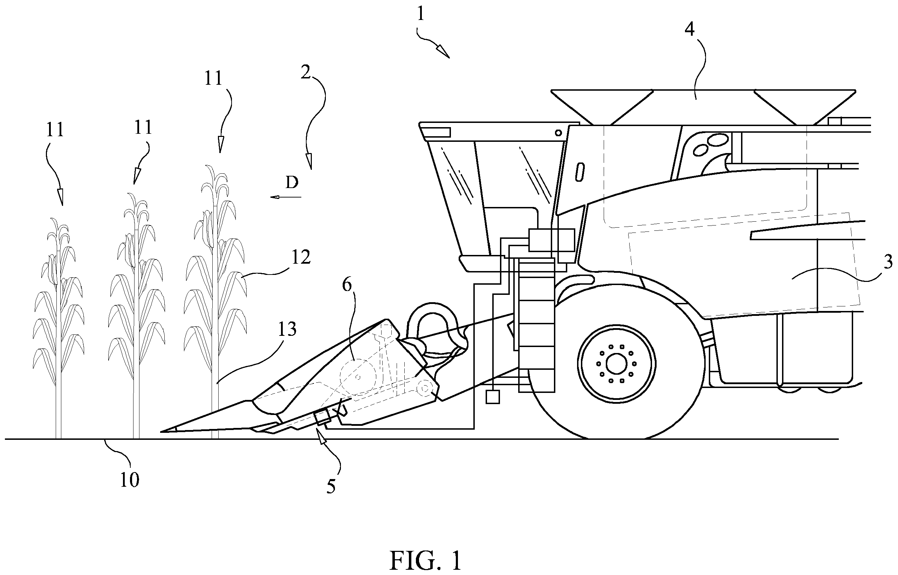

Fig. 1 illustrates an example of a combine harvester 1 in accordance with the invention, as seen in side view. This combine harvester is suitable for harvesting corn, in particular for harvesting corn kernels from corn ears.

In use, the combine harvester is driven over a corn field 10, on which rows of corn plants 11 are grown. The corn plants 11 comprise corn ears 12 and corn stalks 13. The driving direction D is substantially parallel to the rows of corn plants 11.

The combine harvester 1 comprises a corn header 2, a corn processing device 3 and a corn storage tank 4. The corn header 2 harvests the corn ears 12 by separating the corn ears 12 from the corn stalks 13 and transports the harvested corn ears to the corn processing device 3. In the corn processing device 3, the corn kernels are removed from the corn ears 12. The corn kernels are then stored in a corn storage tank 4, which is emptied periodically or continuously.

The corn header 2 comprises a plurality of corn ear harvester devices 5 and a header conveyor 6.

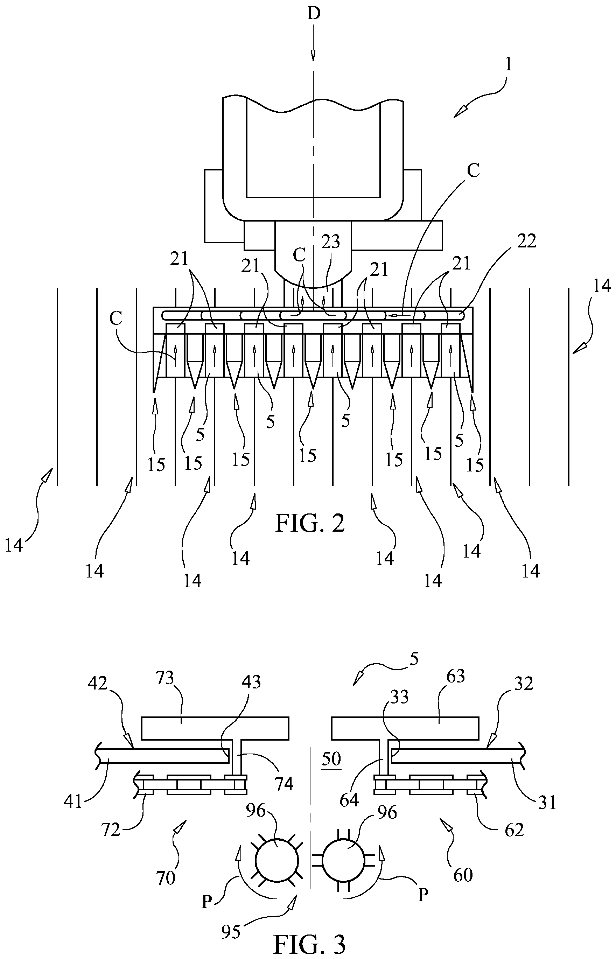

Fig. 2 illustrates an example of a combine harvester 1 in accordance with the invention, in particular the corn header 2 thereof, as seen in top view.

The combine harvester 1 drives in the driving direction D through the corn field, which comprises rows 14 of corn plants.

The corn header comprises multiple row dividers 15, which extend between the rows 14 of the corn plants.

Between the row dividers 15, corn ear harvester devices 5 according to the invention are present.

All corn ear harvester devices 5 comprise a first and a second deck plate and a first and a second gathering chain device. Looking at a pair of two neighboring row dividers, the first deck plate and the first gathering chain device of a corn ear harvester device 5 are arranged adjacent to one of the a pair of two neighboring row dividers, and the second deck plate and the second gathering chain device of this corn ear harvester device 5 are arranged adjacent to the other one of the a pair of two neighboring row dividers.

The corn header 2 further comprises header conveyor 20. As can be seen in fig. 2, the header conveyor 20 is arranged downstream of the corn ear harvester devices 5 when seen in the direction of the movement of the corn ears through the combine harvester, which is indicated by the arrows C in fig. 2.

The header conveyor 20 has a plurality of corn ear receiving areas 21 for receiving harvested corn ears from the corn ear harvester devices 5. The header conveyor 20 further comprises a corn ear discharge 23. The header conveyor optionally comprises an auger 22 for transporting the harvested corn ears from a receiving area 21 to the corn ear discharge 23.

Fig. 3 illustrates a possible embodiment of a corn ear harvester device 5 in accordance with the invention. The corn ear harvester device 5 is suitable for separating corn ears 12 from corn stalks 13.

The corn ear harvester device 5 comprises a first deck plate 31 and a second deck plate 41 . Each deck plate 31,41 has an ear blocking surface 32, 42 and a stalk guide surface 33, 43. The ear blocking surface 31, 41 is the surface against which the corn ear 12 is pulled during the separation of the corn ear 12 from the stalk 13. In practical embodiments, this will usually be the top of the deck plate 31,41. The deck plates 31, 41 further comprise a stalk guide surface 33,43. The stalk guide surface 33, 43 is part of the wall of corn stalk channel 50 and guides the corn stalk 13 when the corn stalk 13 is pulled on in order to detach the corn ears 12 from the corn stalk 13. In practical embodiments, it usually extends in the direction of the thickness of the deck plate 31, 41.

The first deck plate 31 and second deck plate 41 are spaced apart from each other with the stalk guide surface 33 of the first deck plate 31 and the stalk guide surface 43 of the second deck 41 plate facing each other.

In the embodiment shown, the ear blocking surface 32 of the first deck plate 31 and the ear blocking surface 42 of the second deck plate 41 extend in the same plane. This reduces the risk of tilting of the corn ear 12, and therewith the risk that the corn ear 12 slips into the corn stalk channel 50 where it is likely to get stuck between the stalk guide surfaces 33,43 of the first and second deck plate 31, 41.

The corn ear harvester device 5 further comprises a first gathering chain device 60 and a second gathering chain device 70.

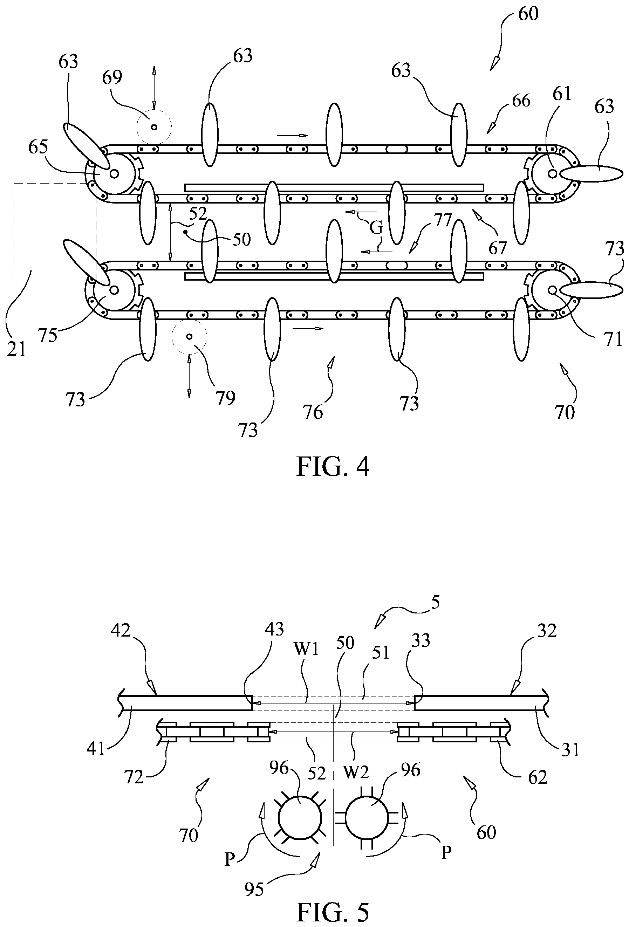

Each gathering chain device 60, 70 comprises at least two sprocket wheels 61, 65, 71, 75, an endless chain 62,72, at least one corn ear paddle 63, 73 and a paddle connector 64, 74. The sprocket wheels are better visible in the top view of fig. 4 than in fig. 3.

Of the at least two sprocket wheels 61, 65, 71, 75, of the gathering chain devices 60, 70, at least one is a drivable sprocket wheel 61, 71. In practical embodiments, each gathering chain device 60,70 will usually comprise one drivable sprocket wheel 61,71, and the other sprocket wheel 65, 75 or sprocket wheel are idler wheels.

The endless chain 62,72 is arranged over a part of the circumference of said sprocket wheels to form a chain loop. The endless chain 62,72 is drivable by the drivable sprocket wheel 61, 71, so a chain drive is formed by the sprocket wheels and the endless chain. The chain can be a roller chain, for example.

The at least one corn ear paddle 63, 73 is adapted to engage and transport a harvested corn ear 12. It is fixedly connected to the endless chain 62, 72 by a paddle connector 64, 74. Therefore, it moves along with the endless chain 62, 72 when the drivable sprocket wheel 61, 71 is rotated. The gathering chain device 60,70 usually comprises a plurality of paddles 63,73. Each paddle 63, 73 is fixedly connected to the endless chain 62, 72 by its own paddle connector 64,74, and the paddles 63, 64 are spaced apart from each other.

Fig. 4 illustrates gathering chain devices 60,70 as can be used in the embodiment of fig. 3 in top view.

Fig. 4 clearly shows the endless chains 62,72, the drivable sprocket wheels 61, 71, the idler sprocket wheels 65,75 and the paddles 64,74. The endless chains 62,72 each form a chain loop 66,76.

The chain loop 66,76 of the endless chain 62,72 comprises at least one straight operational part 67,77. The operational part 67,77 is the part of the chain loop 66, 76 in which the endless chain 62,72 is or can be active in the process of severing corn ears form corn stalks and/or transporting the harvested corn ears to the receiving area 21 of the header conveyor 20. The operational part 67, 77 of the endless chain 62, 72 extends generally along the corn stalk channel 50 and forms part of the wall thereof. The operational parts 67, 77 of the endless chains 62, 72 delimit gathering chain channel section 52 of the corn stalk channel 50.

The operational part 67 of the chain loop 66 of the first gathering chain device 60 and the operational part 77 of the chain loop 76 of the second gathering chain device 70 are spaced apart from each other with the operational part 67 of the chain loop 66 of the first gathering chain device 60 and the operational part 77 of the chain loop 76 of the second gathering chain device 70 facing each other.

The driving direction of the drivable sprocket wheel 61 of the first gathering chain device 60 and of the drivable sprocket wheel 71 of the second gathering chain device 70 are selected to make that the endless chain 62 of the first gathering chain device 60 and the endless chain 72 of the second gathering chain device 70 pass through the operational part 67, 77 of their respective chain loop 66, 76 in the same direction, which is indicated in fig. 4 by the arrows G.

Optionally, the driving speed of the drivable sprocket wheel 61 of the first gathering chain device 60 and of the drivable sprocket wheel 71 of the second gathering chain device 70 are selected to make that the endless chain 62 of the first gathering chain device 60 and the endless chain 72 of the second gathering chain device 70 move at the same speed.

In the embodiment shown in fig. 4, both gathering chain device 60,70 are provided with the optional feature of a chain guide 68,78 which is adapted to engage the endless chain 62, 72 of said gathering chain device 60, 70 over at least a part of the operational part 67, 77 of the chain loop 66, 67. Optionally, one or both chain guide 68,78 is moveable in a direction perpendicular to the operational part 67,77 of the endless chain 62,72 so as to adjust the width of the gathering chain channel section 52.

In the embodiment shown in fig. 4, both gathering chain device 60,70 are provided with the optional feature of a chain tensioner 69,79.

The corn ear harvester device according to the invention comprises a corn stalk channel 50. Fig.3 and fig. 4 already show the corn stalk channel 50, but fig. 5 shows the corn stalk channel 50 in more detail, as in fig. 5 the paddles 63, 73 and paddle connectors 64, 74 are omitted from the drawing in order to better show the corn stalk channel 50.

The corn stalk channel comprises a deck plate channel section 51 and a gathering chain channel section 52. The deck plate channel section 51 extends between the stalk guide surface 33 of first deck plate 31 and the stalk guide surface 43 of the second deck plate 41. The gathering chain channel section 52 extends between the operational part 67 of the chain loop 66 of the first gathering chain device 60 and the operational part 77 of the chain loop 76 of the second gathering chain device 70.

In the corn ear harvester device 5, the deck plate channel section 51 is wider than the gathering chain channel section 52. Width W1 of the deck plate channel section 51 is larger than the width W2 of the gathering chain channel section 52. Both the deck plate channel section 51 and the gathering chain channel section 52 are too narrow for a corn ear to pass through.

Fig. 3 illustrates that the paddle 63 of the first gathering chain device 60 is arranged adjacent to the first deck plate 31 on the side of the ear blocking surface 32 of said first deck plate 31. The endless chain 62 of the first gathering chain device 60 is arranged adjacent to the first deck plate 31 on the side opposite to the ear blocking surface 32 of said first deck plate 31.

The paddle 73 of the second gathering chain device 70 is arranged adjacent to the second deck plate 41 on the side of the ear blocking surface 42 of said second deck plate 41. The endless chain 72 of the second gathering chain device 70 is arranged adjacent to the second deck plate 41 on the side opposite to the ear blocking surface 42 of said second deck plate 41.

Fig. 3 and fig. 4 further illustrate that in this exemplary embodiment, the paddles 63, 74 extend over at least a part of the width of the corn stalk channel 50 , and also over a part of the deck plate 31, 41.

In the embodiment shown in fig. 3, fig. 4 and fig. 5, the paddle connectors 64, 74 extend through the deck plate channel section 51 of the corn stalk channel 50.

In the embodiment shown in fig. 3, fig. 4 and fig. 5, the chain loop 66 of the first gathering chain device 60 extends in a plane that is substantially parallel to the plane of the first deck plate 31 and the chain loop 76 of the second gathering chain device 70 extends in a plane that is substantially parallel to the plane of the second deck plate 41.

In the embodiment shown in fig. 3, fig. 4 and fig. 5, the corn ear harvester device 5 further comprises a stalk puller 95. The stalk puller 95 is adapted to force a corn stalk 13 through the corn stalk channel 50 in a direction that is substantially parallel to the longitudinal direction of said corn stalk 13. In the embodiment shown in fig,3 fig. 4 and fig. 5, the stalk puller 95 comprises a pair of snap rollers 96. The snap rollers 96 catch a corn stalk 13 between them, and pull the corn stalk 13 downward by their rotation in mutually opposite directions (see arrows P in fig. 3 and fig. 5).

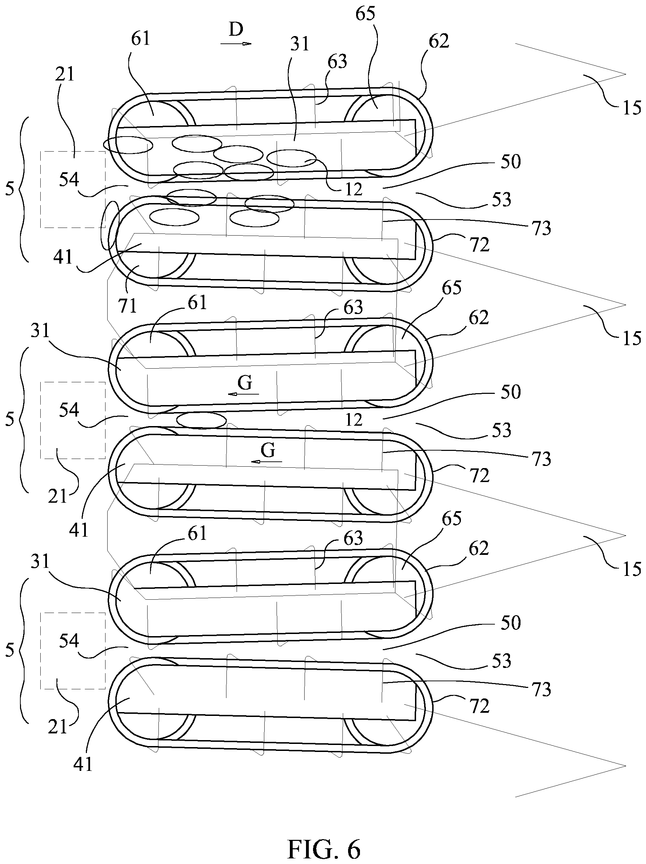

Fig. 6 illustrates in a further embodiment a plurality (in this case three) of corn ear harvester devices 5 as they can be used in a corn header of a combine harvester.

Fig. 6 illustrates row dividers 15. Between adjacent row dividers 15, a corn ear harvester device 5 is arranged.

Fig. 6 illustrates the mutual positions of the first deck plates 31, second deck plates 41, endless chains 62,72, paddles 63,74, drivable sprocket wheels 61,71, idler sprocket wheels 65,75, receiving areas 21 of the header conveyor and corn stalk channels 50.

In the embodiment shown in fig. 6, the corn stalk channel 50 has an upstream end 53 and a downstream end 54 on the opposite side. In this embodiment illustrated in fig. 6, the corn stalk channel 50 is wider at the upstream end 53 than at the downstream end 54.

The corn stalks 13 enter the corn stalk channel 50 via the upstream end 53. The downstream end 54 is arranged adjacent to the receiving area 21 where the harvested corn ears 12 enter the header conveyor of the combine harvester.

In normal operation, the paddles 63,73 transfer the corn ears 12 that have been separated from the corn stalks towards the receiving area 21 and the downstream end 54 of the corn stalk channel. This is illustrated in the corn ear harvester device 5 at the top of fig.6.

Because the paddles 63,73 are quite wide and no surface area of the deck plates 31,41 is used by the gathering chain devices, many corn ears can be transported simultaneously towards the receiving area 21 of the header conveyor.

The middle corn ear harvester device 5 in fig. 6 shows a situation in which a corn ear 12 got stuck between the deck plates 31, 41. Fig. 6 shows that the endless chains 62,72 engage the corn ear 12 and move it towards the receiving area 21, by virtue of the movement of these endless chains 62, 72 in the direction G.

## Claims

1. Corn ear harvester device for separating corn ears from corn stalks, which corn ear harvester device (5) comprises:
- two deck plates (31, 41), wherein each deck plate (31,41) has an ear blocking surface (32, 42) and a stalk guide surface (33, 43), which deck plates (31, 41) are spaced apart from each other with the stalk guide surface (33) of a first deck plate (31) and the stalk guide surface (43) of a second deck plate (41) facing each other,
- two gathering chain devices (60, 70), respectively associated with the first and second deck plates (31, 41), wherein each gathering chain device comprises:
- a drivable endless chain (62, 72),
- at least one corn ear paddle (63, 73) which is adapted to engage and transport a harvested corn ear (12),
- a paddle connector (64, 74) which fixedly connects the corn ear paddle (63, 73) to the endless chain (62, 72), wherein the endless chains (62,72) are spaced apart from each other, and wherein one of the endless chains (62,72) is drivable in a clockwise direction and the other of the endless chains (62, 72) is drivable in a counter-clockwise direction,
- a corn stalk channel (50) for receiving and guiding a corn stalk, wherein the corn stalk channel (50) comprises a deck plate channel section (51) which extends between the stalk guide surfaces (33, 43) of the deck plates (31, 41) and a gathering chain channel section (52) which extends between the endless chains (62,72) of the gathering chain devices (60,70),
wherein the deck plate channel section (51) has a width which is defined by the distance between the stalk guide surfaces (33, 43) of the deck plates (31, 41) and is selected to prevent corn ears passing through the deck plate channel section (51) in a direction substantially perpendicular to the longitudinal direction of the corn stalk channel (50),
and wherein the at least one corn ear paddle (63, 73) of each gathering chain device (60,70) is arranged adjacent to the respective associated deck plate (31, 41) on the side of the ear blocking surface (32, 42) of said deck plate (31,41), and **characterised in that** the endless chain (62, 72) of said gathering chain device (60, 70) is arranged adjacent to said deck plate (31, 41) on the side opposite to the ear blocking surface (32, 42) of said deck plate (31, 41).

2. Corn ear harvester device according to claim 1, wherein the deck plate channel section (51) of the corn stalk channel is wider than the gathering chain channel section (52).

3. Corn ear harvester device according to any of the preceding claims, wherein at least one paddle connector (64, 74) extends through the deck plate channel section (51) of the corn stalk channel (50).

4. Corn ear harvester device according to claim 1, wherein the endless chain (62,72) of each gathering chain device (60,70) forms a chain loop (66, 67), which chain loop comprises at least one substantially straight operational part (67,77), and wherein the operational part (67, 77) of the chain loop of the each gathering chain device is substantially parallel to the stalk guide surface (33, 43) of a deck plate.

5. Corn ear harvester device according to any of the preceding claims, wherein the width of the gathering chain channel section (52) and/or the width of the deck plate channel section (51) of the corn stalk channel are adjustable.

6. Corn ear harvester device according to claim 5, wherein at least one gathering chain device further comprises a chain guide (68,78) which is adapted to engage the endless chain (62,72) of said gathering chain device, optionally over at least a part of an operational part (67,77) of a chain loop of said endless chain (62, 72), which chain guide is moveable in a direction perpendicular to the endless chain (62, 72) so as to adjust the width of the gathering chain channel section.

7. Corn ear harvester device according to claim 5, wherein at least one gathering chain device (60,70) comprises a sprocket wheel (61,65,71,75) which engages the endless chain (62, 72) of said gathering chain device (60,70), and wherein the position of said sprocket wheel (61,65,71,75) is adjustable so as to adjust the width of the gathering chain channel section (52).

8. Corn ear harvester device according to any of the preceding claims, wherein the corn ear harvester device further comprises a stalk puller (95), which is adapted to force a corn stalk through the corn stalk channel (50) in a direction that is substantially parallel to the longitudinal direction of said corn stalk (13), wherein optionally the stalk puller comprises a pair of snap rollers (96).

9. Corn ear harvester device according to any of the preceding claims, wherein the corn stalk channel (50) has an upstream end (53) and a downstream end (54), wherein the corn stalk channel is wider at the upstream end than at the downstream end.

10. Corn ear harvester device according to any of the preceding claims, wherein each gathering chain device comprises at least two sprocket wheels (61, 65, 71, 75), of which at least one is a drivable sprocket wheel (61, 71), which sprocket wheels engage an endless chain (62, 72) of a gathering chain device (60,70), which endless chain is arranged over a part of the circumference of said sprocket wheels (61, 65, 71, 75) to form a chain loop (66, 67), which chain loop comprises at least one straight operational part (67,77), wherein the operational part (67) of the chain loop (66) of the first gathering chain device (60) and the operational part (77) of the chain loop (76) of the second gathering chain device (70) are spaced apart from each other with the operational part (67) of the chain loop (66) of the first gathering chain device (60) and the operational part (77) of the chain loop (76) of the second gathering chain device (70) facing each other, and wherein the driving direction of drivable sprocket wheel (61) of the first gathering chain device (60) and the driving direction of the drivable sprocket wheel (71) of the second gathering chain device (70) are selected to make the endless chain (62) of the first gathering chain device (60) pass through the operational part (67) of the chain loop (66) of the endless chain (61) of the first gathering chain device (60) in the same direction as the endless chain (72) of the second gathering chain device (70) passes through the operational part (77) of the chain loop (76) of the endless chain (72) of the second gathering chain device (70).

11. Combine harvester for harvesting corn,
which combine harvester comprises:
- a corn header (2), which comprises:
- a plurality of corn ear harvester devices (5) according to claim 1, which corn ear harvester devices are arranged in a row with the corn stalk channels (50) parallel to each other, wherein the corn stalk channels (50) each have an upstream end (53) for receiving a corn stalk and a downstream end (54) at the opposite side of the upstream end, wherein in operation the endless chains (62,72) move the corn ear paddles (63, 73) along a corn stalk channel (50) in a direction from the upstream end towards the downstream end,
- a header conveyor (20), which is arranged downstream of the corn ear harvester devices (5) when seen in the direction of the movement of the corn ears through the combine harvester (1), which header conveyor has a plurality of corn ear receiving areas (21) for receiving harvested corn ears from the corn ear harvester devices (5), and a corn ear discharge (23),
- a corn processing device (3), which is arranged downstream of the corn ear discharge to receive harvested corn ears from the corn ear discharge of the header conveyor, which corn ear processing device is adapted to remove the corn kernels from the harvested corn ears,
- a corn storage tank (4), which is adapted and arranged to receive the corn kernels from the corn processing device.

## Patentansprüche

1. Vorrichtung für eine Maiskolben-Erntemaschine zum Trennen von Maiskolben von Maisstängeln, wobei die Vorrichtung (5) für eine Maiskolben-Erntemaschine umfasst:
- zwei Deckplatten (31, 41), wobei jede Deckplatte (31, 41) eine Kolben-Rückhaltefläche (32, 42) und eine Stängel-Führungsfläche (33, 43) aufweist, wobei die Deckplatten (31, 41) beabstandet voneinander angeordnet sind, wobei die Stängel-Führungsfläche (33) einer ersten Deckplatte (31) und die Stängel-Führungsfläche (43) einer zweiten Deckplatte (41) einander gegenüberliegen,
- zwei Sammelkettenvorrichtungen (60, 70), die jeweils mit einer aus erster und zweiter Deckplatte (31, 41) verbunden sind, wobei jede Sammelkettenvorrichtung umfasst:
- eine antreibbare Endloskette (62, 72),
- mindestens eine Maiskolbenschaufel (63, 73), die dazu eingerichtet ist, einen geernteten Maiskolben (12) zu ergreifen und zu transportieren,
- ein Schaufel-Verbindungselement (64, 74), das die Maiskolbenschaufel (63, 73) und die Endloskette (62, 72) fest miteinander verbindet, wobei die Endlosketten (62, 72) voneinander beabstandet angeordnet sind und wobei eine der Endlosketten (62, 72) in einer Richtung im Uhrzeigersinn antreibbar ist und die andere der Endlosketten (62, 72) in einer Richtung entgegen dem Uhrzeigersinn antreibbar ist,
- einen Maisstängel-Kanal (50) zum Aufnehmen und Führen eines Maisstängels, wobei der Maisstängel-Kanal (50) einen Deckplatten-Kanalabschnitt (51), der sich zwischen den Stängel-Führungsflächen (33, 43) der Deckplatten (31, 41) erstreckt, und einen Sammelketten-Kanalabschnitt (52), der sich zwischen den Endlosketten (62, 72) der Sammelkettenvorrichtungen (60, 70) erstreckt, umfasst,
wobei der Deckplatten-Kanalabschnitt (51) eine Breite aufweist, die durch den Abstand zwischen den Stängel-Führungsflächen (33, 43) der Deckplatten (31, 41) definiert ist und die derart gewählt ist, dass sie das Hindurchführen von Maiskolben durch den Deckplatten-Kanalabschnitt (51) in eine Richtung im Wesentlichen senkrecht zu der Längsrichtung des Maisstängel-Kanals (50) verhindert, und
wobei die mindestens eine Maiskolbenschaufel (63, 73) jeder Sammelkettenvorrichtung (60, 70) an die jeweils zugehörige Deckplatte (31, 41) angrenzend auf der Seite der Kolben-Rückhaltefläche (32, 42) der Deckplatte (31, 41) angeordnet ist,
**dadurch gekennzeichnet, dass**
die Endloskette (62, 72) der Sammelketten-Vorrichtung (60, 70) an die Deckplatte (31, 41) angrenzend auf der der Kolben-Rückhaltefläche (32, 42) der Deckplatte (31, 41) gegenüberliegenden Seite angeordnet ist.

2. Vorrichtung für eine Maiskolben-Erntemaschine nach Anspruch 1, wobei der Deckplatten-Kanalabschnitt (51) des Maisstängel-Kanals breiter ist als der Sammelketten-Kanalabschnitt (52).

3. Vorrichtung für eine Maiskolben-Erntemaschine nach einem der vorangehenden Ansprüche, wobei sich mindestens ein Schaufel-Verbindungselement (64, 74) durch den Deckplatten-Kanalabschnitt (51) des Maisstängel-Kanals (50) erstreckt.

4. Vorrichtung für eine Maiskolben-Erntemaschine nach Anspruch 1, wobei die Endloskette (62, 72) jeder Sammelkettenvorrichtung (60, 70) eine Kettenschlaufe (66, 76) bildet, wobei die Kettenschlaufe mindestens einen im Wesentlichen geraden Funktionsabschnitt (67, 77) umfasst und wobei der Funktionsabschnitt (67, 77) der Kettenschlaufe jeder Sammelkettenvorrichtung im Wesentlichen parallel zu der Stängel-Führungsfläche (33, 43) einer Deckplatte ist.

5. Vorrichtung für eine Maiskolben-Erntemaschine nach einem der vorangehenden Ansprüche, wobei die Breite des Sammelketten-Kanalabschnitts (52) und/oder die Breite des Deckplatten-Kanalabschnitts (51) des Maisstängel-Kanals einstellbar ist.

6. Vorrichtung für eine Maiskolben-Erntemaschine nach Anspruch 5, wobei die mindestens eine Sammelkettenvorrichtung weiterhin eine Kettenführung (68, 78) umfasst, die dazu eingerichtet ist, in die Endloskette (62, 72) der Sammelkettenvorrichtung, wahlweise entlang zumindest eines Teils des Funktionsabschnitts (67, 77) einer Kettenschlaufe der Endloskette (62, 72), einzugreifen, wobei die Kettenführung in einer Richtung senkrecht zu der Endloskette (62, 72) bewegbar ist, um die Breite des Sammelketten-Kanalabschnitts einzustellen.

7. Vorrichtung für eine Maiskolben-Erntemaschine nach Anspruch 5, wobei mindestens eine Sammelkettenvorrichtung (60, 70) ein Kettenrad (61, 65, 71, 75) umfasst, das in die Endloskette (62, 72) der Sammelkettenvorrichtung (60, 70) eingreift, und wobei die Position des Kettenrads (61, 65, 71, 75) einstellbar ist, um die Breite des Sammelketten-Kanalabschnitts (52) einzustellen.

8. Vorrichtung für eine Maiskolben-Erntemaschine nach einem der vorangehenden Ansprüche, wobei die Vorrichtung für eine Maiskolben-Erntemaschine weiterhin eine Stängel-Zugeinrichtung (95) umfasst, die dazu eingerichtet ist, einen Maisstängel durch den Maisstängel-Kanal (50) in eine Richtung zu zwingen, die im Wesentlichen parallel zu der Längsrichtung des Maisstängels (13) ist, wobei die Stängel-Zugeinrichtung wahlweise ein Paar von Pflückwalzen (96) umfasst.

9. Vorrichtung für eine Maiskolben-Erntemaschine nach einem der vorangehenden Ansprüche, wobei der Maisstängel-Kanal (50) ein einlaufseitiges Ende (53) und ein auslaufseitiges Ende (54) aufweist, wobei der Maisstängel-Kanal an dem einlaufseitigen Ende breiter ist als an dem auslaufseitigen Ende.

10. Vorrichtung für eine Maiskolben-Erntemaschine nach einem der vorangehenden Ansprüche, wobei jede Sammelkettenvorrichtung mindestens zwei Kettenräder (61, 65, 71, 75) umfasst, von denen zumindest eines ein antreibbares Kettenrad (61, 71) ist, wobei die Kettenräder in eine Endloskette (62, 72) der Sammelkettenvorrichtung (60, 70) eingreifen, wobei die Endloskette entlang eines Teils des Umfangs der Kettenräder (61, 65, 71, 75) angeordnet sind, um eine Kettenschlaufe (66, 76) zu bilden, wobei die Kettenschlaufe mindestens einen geraden Funktionsabschnitt (67, 77) umfasst, wobei der Funktionsabschnitt (67) der Kettenschlaufe (66) der ersten Sammelkettenvorrichtung (60) und der Funktionsabschnitt (77) der Kettenschlaufe (76) der zweiten Sammelkettenvorrichtung (70) beabstandet voneinander angeordnet sind, wobei sich der Funktionsabschnitt (67) der Kettenschlaufe (66) der ersten Sammelkettenvorrichtung (60) und der Funktionsabschnitt (77) der Kettenschlaufe (76) der zweiten Sammelkettenvorrichtung (70) gegenüberliegen, und wobei die Antriebsrichtung des antreibbaren Kettenrads (61) der ersten Sammelkettenvorrichtung (60) und die Antriebsrichtung des antreibbaren Kettenrads (71) der zweiten Sammelkettenvorrichtung (70) derart gewählt sind, dass sie dafür sorgen, dass die Endloskette (62) der ersten Sammelkettenvorrichtung (60) in derselben Richtung durch den Funktionsabschnitt (67) der Kettenschlaufe (66) der Endloskette (62) der ersten Sammelkettenvorrichtung (60) verläuft, wie die Endloskette (72) der zweiten Sammelkettenvorrichtung (70) durch den Funktionsabschnitt (77) der Kettenschlaufe (76) der Endloskette (72) der zweiten Sammelkettenvorrichtung (70) verläuft.

11. Mähdrescher zum Ernten von Mais, wobei der Mähdrescher umfasst:
- einen Maiserntevorsatz (2), der umfasst:
- eine Mehrzahl von Vorrichtungen (5) für eine Maiskolben-Erntemaschine nach Anspruch 1, wobei die Vorrichtungen für eine Maiskolben-Erntemaschine in einer Reihe mit den Maisstängel-Kanälen (50) parallel zueinander angeordnet sind, wobei die Maisstängel-Kanäle (50) jeweils ein einlaufseitiges Ende (53) zum Aufnehmen eines Maisstängels und ein auslaufseitiges Ende (54) an dem dem einlaufseitigen Ende gegenüberliegenden Ende aufweisen, wobei die Endlosketten (62, 72) im Betrieb die Maiskolbenschaufeln (63, 73) entlang eines Maisstängel-Kanals (50) in einer Richtung vom einlaufseitigen Ende zum auslaufseitigen Ende bewegen,
- ein Erntevorsatz-Fördermittel (20), das bei Betrachtung in Richtung der Bewegung der Maiskolben durch den Mähdrescher (1) auslaufseitig der Vorrichtungen (5) für eine Maiskolben-Erntemaschine angeordnet ist, wobei das Erntevorsatz-Fördermittel eine Mehrzahl von Maiskolben-Aufnahmebereichen (21) zum Übernehmen geernteter Maiskolben von den Vorrichtungen (5) für eine Maiskolben-Erntemaschine und eine Maiskolbenabgabe (23) aufweist,
- eine Maisverarbeitungsvorrichtung (3), die auslaufseitig der Maiskolbenabgabe angeordnet ist, um geerntete Maiskolben von der Maiskolbenabgabe des Erntevorsatz-Fördermittels zu übernehmen, wobei die Maisverarbeitungsvorrichtung dazu eingerichtet ist, de Maiskörner von den geernteten Maiskolben zu entfernen,
- einen Maistank (4), der dazu eingerichtet und derart angeordnet ist, dass er die Maiskörner von der Maisverarbeitungsvorrichtung aufnimmt.

## Revendications

1. Dispositif récolteur d'épis de maïs pour la séparation des épis de maïs des rafles de maïs, lequel dispositif récolteur d'épis de maïs (5) comprend :
- deux plateaux de liage (31, 41), dans lequel chaque plateau de liage (31, 41) présente une surface de blocage d'épis (32, 42) et une surface de guidage de rafles (33, 43), lesdits plateaux de liage (31, 41) étant séparés l'un de l'autre par la surface de guidage de rafles (33) d'un premier plateau de liage (31) et la surface de guidage de rafles (43) d'un second plateau de liage (41) se faisant face,
- deux dispositifs à chaîne haveuse (60, 70), associés respectivement avec les premier et second plateaux de liage (31, 41), dans lequel chaque dispositif à chaîne haveuse comprend :
- une chaîne sans fin entraînable (62, 72),
- au moins une palette à épis de maïs (63, 73) laquelle est adaptée pour engager et transporter un épi de maïs récolté (12),
- un connecteur de palette (64, 74) qui connecte fixement la palette à épis de maïs (63, 73) à la chaîne sans fin (62, 72), dans lequel les chaînes sans fin (62, 72) sont espacées l'une de l'autre et dans lequel l'une des chaînes sans fin (62, 72) est entraînable dans le sens des aiguilles d'une montre et l'autre des chaînes sans fin (62, 72) est entraînable dans le sens contraire des aiguilles d'une montre,
- un canal à rafles de maïs (50) pour la réception et le guidage d'une rafle de maïs, dans lequel le canal à rafles de maïs (50) comprend une section de canal de plateau de liage (51) qui s'étend entre les surfaces de guidage de rafles (33, 43) des plateaux de liage (31, 41) et une section de canal à chaîne haveuse (52) qui s'étend entre les chaînes sans fin (62, 72) des dispositifs à chaîne haveuse (60, 70),
dans lequel la section de canal de plateau de liage (51) présente une largeur qui est définie par la distance entre les surfaces de guidage de rafles (33, 43) des plateaux de liage (31, 41) et est sélectionnée pour empêcher les épis de maïs de passer par la section de canal de plateau de liage (51) dans un sens essentiellement perpendiculaire au sens longitudinal du canal à rafles de maïs (50),
et dans lequel la au moins une palette à épis de maïs (63, 73) de chaque dispositif à chaîne haveuse (60, 70) est disposée de manière adjacente aux plateaux de liage associés respectifs (31, 41) sur le côté de la surface de blocage d'épis (32, 42) dudit plateau de liage (31, 41), et **caractérisé en ce que** la chaîne sans fin (62, 72) dudit dispositif à chaîne haveuse (60, 70) est disposée de manière adjacente auxdits plateaux de liage (31, 41) sur le côté opposé à la surface de blocage d'épis (32, 42) dudit plateau de liage (31, 41).

2. Dispositif récolteur d'épis de maïs selon la revendication 1, dans lequel le canal de plateau de liage (51) du canal à rafles de maïs est plus large que la section de canal à chaîne haveuse (52).

3. Dispositif récolteur d'épis de maïs selon l'une quelconque des revendications précédentes, dans lequel au moins un connecteur de palette (64, 74) s'étend à travers la section de canal de plateau de liage (51) du canal à rafles de maïs (50).

4. Dispositif récolteur d'épis de maïs selon la revendication 1, dans lequel la chaîne sans fin (62, 72) de chaque dispositif à chaîne haveuse (60, 70) forme une boucle de chaîne (66, 67), laquelle boucle de chaîne comprend au moins une partie opérationnelle essentiellement droite (67, 77), et dans laquelle la partie opérationnelle (67, 77) de la boucle de chaîne de chaque dispositif à chaîne haveuse est substantiellement parallèle à la surface de guidage de rafles (33, 43) d'un plateau de liage.

5. Dispositif récolteur d'épis de maïs selon l'une quelconque des revendications précédentes, dans lequel la largeur de la section de canal à chaîne haveuse (52) et/ou la largeur de section de canal de plateau de liage (51) du canal à rafles de maïs sont réglables.

6. Dispositif récolteur d'épis de maïs selon la revendication 5, dans lequel au moins un dispositif à chaîne haveuse comprend également un guide de chaîne (68, 78) qui est adapté pour engager la chaîne sans fin (62, 72) dudit dispositif à chaîne haveuse, en option sur au moins une partie opérationnelle (67, 77) d'une boucle de chaîne de ladite chaîne sans fin (62, 72), lequel guide de chaîne est déplaçable dans un sens perpendiculaire à la chaîne sans fin (62, 72) de manière à régler la largeur de la section de canal à chaîne haveuse.

7. Dispositif récolteur d'épis de maïs selon la revendication 5, dans lequel at least un dispositif à chaîne haveuse (60, 70) comprises un pignon à chaîne (61, 65, 71, 75) qui engage la chaîne sans fin (62, 72) dudit dispositif à chaîne haveuse (60, 70), et dans lequel la position dudit pignon à chaîne (61, 65, 71, 75) est réglable de manière à régler la largeur de la section de canal à chaîne haveuse (52).

8. Dispositif récolteur d'épis de maïs selon l'une quelconque des revendications précédentes, dans lequel le dispositif récolteur d'épis de maïs comprend en plus un tire-rafles (95), qui est adapté pour faire passer des rafles de maïs à travers le canal à rafles de maïs (50) dans un sens qui est essentiellement parallèle au sens longitudinal desdites rafles de maïs (13), dans lequel, en option, le tire-rafles comprend une paire de rouleaux de retenue (96).

9. Dispositif récolteur d'épis de maïs selon l'une quelconque des revendications précédentes, dans lequel le canal à rafles de maïs (50) a une extrémité amont (53) et une extrémité aval (54), dans lequel le canal à rafles de maïs est plus large à l'extrémité amont qu'à l'extrémité aval.

10. Dispositif récolteur d'épis de maïs selon l'une quelconque des revendications précédentes, dans lequel chaque dispositif à chaîne haveuse comprises au moins deux pignons à chaîne (61, 65, 71, 75), dont au moins un est un pignon à chaîne entraînable (61, 71), ledit pignon à chaînes engageant une chaîne sans fin (62, 72) d'un dispositif à chaîne haveuse (60, 70), ladite chaîne sans fin étant disposée sur une partie de la circonférence desdits pignons à chaîne (61, 65, 71, 75) pour former une boucle de chaîne (66, 67), ladite boucle de chaîne comprenant au moins une partie opérationnelle droite (67, 77), dans lequel la partie opérationnelle (67) de la boucle de chaîne (66) du premier dispositif à chaîne haveuse (60) et la partie opérationnelle (77) de la boucle de chaîne (76) du second dispositif à chaîne haveuse (70) sont espacées l'un de l'autre, la partie opérationnelle (67) de la boucle de chaîne (66) du premier dispositif à chaîne haveuse (60) et la partie opérationnelle (77) de la boucle de chaîne (76) du second dispositif à chaîne haveuse (70) se font face, et dans lequel le sens d'entraînement du pignon à chaîne (61) du premier dispositif à chaîne haveuse (60) et le sens d'entraînement du pignon à chaîne entraînable (71) du second dispositif à chaîne haveuse (70) sont sélectionnés pour faire passer la chaîne sans fin (62) du premier dispositif à chaîne haveuse (60) par la partie opérationnelle (67) de la boucle de chaîne (66) de la chaîne sans fin (61) du premier dispositif à chaîne haveuse (60) dans le même sens que la chaîne sans fin (72) du second dispositif à chaîne haveuse (70) passe par la partie opérationnelle (77) de la boucle de chaîne (76) de la chaîne sans fin (72) du second dispositif à chaîne haveuse (70).

11. Moissonneuse-batteuse pour la récolte de maïs, laquelle moissonneuse-batteuse comprend :
- un bec cueilleur à maïs (2), qui comprend :
- une pluralité de dispositifs récolteurs d'épis de maïs (5) selon la revendication 1, lesdits dispositifs récolteurs d'épis de maïs étant disposés sur une rangée avec les canaux à rafles de maïs (50) parallèles l'un à l'autre, dans lequel les canaux à rafles de maïs (50) possèdent chacun une extrémité amont (53) pour recevoir des rafles de maïs et une extrémité aval (54) du côté opposé de l'extrémité amont, dans lequel, en fonctionnement, les chaînes sans fin (62, 72) déplacent les palettes à épis de maïs (63, 73) le long d'un canal à rafles de maïs (50) dans un sens allant de l'extrémité amont vers l'extrémité aval,
- un convoyeur moissonneur (20), qui est disposé en aval des dispositifs récolteurs d'épis de maïs (5) lorsqu'il est considéré dans le sens du mouvement des épis de maïs à travers la moissonneuse-batteuse (1), lequel convoyeur moissonneur présente une pluralité de zones de réception d'épis de maïs (21) pour la réception des épis de maïs récoltés à partir des dispositifs récolteurs d'épis de maïs (5), et une décharge d'épis de maïs (23),
- dispositif de traitement du maïs (3), qui est disposé en aval de la décharge des épis de maïs pour recevoir les épis de maïs récoltés de la décharge des épis de maïs du convoyeur moissonneur, lequel dispositif de traitement des épis est adapté pour enlever les grains de maïs des épis de maïs récoltés,
- un réservoir de stockage de maïs (4), qui est adapté et disposé pour recevoir les grains de maïs du dispositif de traitement du maïs.
